(19) **Europäisches Patentamt / European Patent Office / Office européen des brevets**

(11) **EP 4 095 499 B1**

(12) **EUROPEAN PATENT SPECIFICATION**

(45) Date of publication and mention
of the grant of the patent:
**20.03.2024 Bulletin 2024/12**

(21) Application number: **21195909.3**

(22) Date of filing: **10.09.2021**

(51) International Patent Classification (IPC):
**G01K 7/36** $^{(2006.01)}$

(52) Cooperative Patent Classification (CPC):
**G01K 7/36**

(54) **METHOD AND SYSTEM FOR MEASURING MAGNETIC NANOMETER TEMPERATURE**

VERFAHREN UND SYSTEM ZUR MESSUNG VON MAGNETISCHER NANOMETERTEMPERATUR

PROCÉDÉ ET SYSTÈME MESURER UNE TEMPÉRATURE NANOMÉTRIQUE MAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2021 CN 202110575560**

(43) Date of publication of application:
**30.11.2022 Bulletin 2022/48**

(73) Proprietors:
- **Huazhong University of Science and Technology Wuhan**
  **Hubei 430074 (CN)**
- **Shenzhen Huazhong University of Science and Technology Research Institute**
  **Shenzhen, Guangdong 518000 (CN)**

(72) Inventors:
- **LIU, Wenzhong**
  **Hongshan Wuhan 430074 (CN)**
- **LI, Zhuangzhuang**
  **Hongshan Wuhan 430074 (CN)**
- **YI, Wentong**
  **Hongshan Wuhan 430074 (CN)**
- **ZHU, Yiwen**
  **Hongshan Wuhan 430074 (CN)**
- **DU, Zhongzhou**
  **Hongshan Wuhan 430074 (CN)**

(74) Representative: **Becker, Eberhard**
**Becker Kurig & Partner**
**Patentanwälte mbB**
**Bavariastraße 7**
**80336 München (DE)**

(56) References cited:
CN-A- 101 271 059     CN-A- 101 776 575
CN-B- 106 556 466     US-A1- 2005 171 421

**Description**

BACKGROUND OF THE DISCLOSURE

1. Field of the Disclosure

The disclosure belongs to the technical field of magneto-optical testing, and more specifically, relates to a method and system for measuring magnetic nanometer temperature.

2. Description of Related Art

Temperature is one of the most basic physical quantities of substance in nature. The measurement of temperature is of great significance for understanding the nature of substance in nature.

Currently, the temperature (field) measurement technology under normal environment has the characteristics of high precision, high instantaneity, etc., and has been well developed. For example, in the intrusive temperature measurement method based on conventional thermal resistance, thermocouple and other temperature sensors, the temperature of the area under measurement is directly sensed through the temperature sensor that is placed in the area under measurement. However, in some special environments, such as the circumstances where the temperature is higher than the melting point of the above-mentioned temperature sensor, the temperature cannot be measured through direct contact. Under the circumstances, the conventional temperature measurement methods based on temperature sensors such as thermal resistance and thermocouple are not applicable. Besides, the above-mentioned intrusive temperature measurement method is more destructive, and the probe is very likely to change or interfere with the measured object. In order to solve the above problems, the existing optical temperature measurement methods based on infrared temperature measurement, temperature indicator paint are adopted. By concentrating the infrared radiation collected from the area under measurement on the infrared sensor source, the temperature of the area under measurement can be measured. In this manner, the temperature of the area under measurement can be measured without contact. However, when the area under measurement is an external medium such as glass, such area cannot be passed through by infrared rays, and the temperature of the area under measurement cannot be measured. The temperature indicator paint can only be used to measure the highest temperature in the whole process through the life method, and cannot be used again once being used, which cannot meet the needs of long-term observation. An example can be found in CN 106 556 466 B, which describes a rapid temperature measurement method based on a magnetic nanometer magnetization intensity-temperature curve.

SUMMARY OF THE DISCLOSURE

In view of the above defects or needs for improvement of known technologies, the disclosure provides a method and system for measuring magnetic nanometer temperature to solve the technical problem of known technologies, that is, the inability to achieve non-intrusive temperature measurement in the area under measurement under a special environment.

In order to achieve the above purpose, the disclosure provides a method for measuring magnetic nanometer temperature, which includes the following steps:

Step S 1: The magneto-optical Kerr angle of the magnetic nano-coating is measured; the magnetic nano-coating is arranged on the area under measurement, the Curie temperature of the magnetic nano-coating is greater than the temperature of the area under measurement.

Step S2: Based on the linear relationship between the magneto-optical Kerr angle of the magnetic nano-coating and the magnetization intensity, the magnetization intensity of the magnetic nano-coating is obtained.

Step S3: Based on Curie-Weiss law, the temperature of the magnetic nano-coating, that is, the temperature of the area under measurement, is calculated according to the magnetization intensity of the magnetic nano-coating.

Further preferably, the linear relationship between the magneto-optical Kerr angle of the magnetic nano-coating and the magnetization intensity is expressed as follows.

$$\theta_K = A_{K1} + A_{K2}M_S$$

In the expression, $\theta_K$ is the magneto-optical Kerr angle of the magnetic nano-coating; $A_{K1}$ and $A_{K2}$ are the optical matrix parameters describing the magneto-optical Kerr effect of the magnetic nano-coating; and $M_S$ is the magnetization intensity of the magnetic nano-coating.

Further preferably, the temperature T of the area under measurement is:

$$T = \frac{g\mu_B J B}{K_B x}$$

$$M_S(x) = N g \mu_B J B_J(x)$$

$$B_J(x) = \left(\frac{2J+1}{2J}\right)\coth\left(\frac{2J+1}{2J}x\right) - \frac{1}{2J}\coth\left(\frac{1}{2J}x\right)$$

In the expression, g is the Lande factor, $\mu_B$ is the Bohr magneton, J is a total angular momentum quantum number of the microscopic magnetic moment in the magnetic nano-coating, B is a sum of the induced magnetic field intensity of the magnetic nano-coating and the applied magnetic field intensity, $K_B$ is Boltzmann constant, x is the ratio of the Zeeman energy of the magnetic moment of the induced magnetic field of the magnetic nano-coating and the superimposed magnetic field of the applied magnetic field to the random thermal energy, N is a number of atoms in the magnetic nano-coating per unit volume, and $B_j(x)$ is the Brillouin function.

Further preferably, the magneto-optical Kerr angle of the magnetic nano-coating is measured by using the extinction magneto-optical Kerr angle measurement method.

Further preferably, step S 1 includes:
The magnetic nano-coating is placed on the area under measurement, the positions of the light generator, polarizer, magnetic nano-coating, analyzer, and photoelectric sensor are adjusted to form a completed reflection circuit.

The angles of the polarizer and analyzer are adjusted to make the polarized light intensity measured by the photoelectric sensor to be zero.

The analyzer is rotated by the angle $\delta$, and the photoelectric sensor is adopted to measure the polarized light intensity, which is $I_0$ at this time.

A DC magnetic field is applied to the area under measurement, and a photoelectric sensor is adopted to measure the polarized light intensity, which is I at this time.

Based on the rotation angle $\delta$ of the analyzer, the polarized light intensity $I_0$, and the polarized light intensity I, the magneto-optical Kerr angle of polarized light, that is, the magneto-optical Kerr angle of the magnetic nano-coating, is calculated.

Further preferably, the magneto-optical Kerr angle of the magnetic nano-coating is: $\theta_K = \frac{\delta}{2}\frac{I-I_0}{I_0}$ .

In the second aspect, the disclosure provides a system for measuring magnetic nanometer temperature, including:
A magneto-optical Kerr angle measurement module is configured to measure the magneto-optical Kerr angle of the magnetic nano-coating, the magnetic nano-coating is arranged on the area under measurement; the Curie temperature of the magnetic nano-coating is less than the temperature of the area under measurement.

A magnetization intensity calculation module is configured to obtain the magnetization intensity of the magnetic nano-coating based on the linear relationship between the magneto-optical Kerr angle of the magnetic nano-coating and the magnetization intensity.

A temperature calculation module is configured to calculate the temperature of the magnetic nano-coating, that is, the temperature of the area under measurement, according to the magnetization intensity of the magnetic nano-coating based on Curie-Weiss law.

In general, through the above technical solutions conceived in the disclosure, the following beneficial effects can be achieved.

1. The disclosure provides a magnetic nanometer temperature measurement method. After the magnetic nano-coating is arranged in the area under measurement, the magneto-optical Kerr angle of the magnetic nano-coating is measured, and the relationship model with respect to the magneto-optical Kerr angle and temperature of the magnetic nano-coating is established, thereby obtaining the temperature of the area under measurement. The measurement method provided by the disclosure is a non-contact and non-intrusive measurement method, and the light used to measure the magneto-optical Kerr angle of the magnetic nano-coating is not limited to infrared light, but can also be visible light, which can be selected based on different measurement scenarios. The measurement method of the disclosure is applicable for non-intrusive measurement of temperature of the area under measurement in various special environments.

2. Compared with the intrusive temperature measurement method, the magnetic nanometer temperature measurement method provided by the disclosure can provide instant temperature measurement simultaneously under the condition that the object under measurement is almost physically separated, and the measurement method of the disclosure is simple and has a faster measurement speed.

3. The magnetic nanometer temperature measurement method provided by the disclosure has the advantages of optical temperature measurement, good instantaneity, fast response speed, and non-contact measurement, etc. Besides, compared to optical temperature measurement such as infrared temperature measurement, the disclosure is less interfered with environmental influence such as irradiation, and thus being able to measure the temperature of the area under measurement in complicated environments.

4. Compared with the typical temperature measurement method, the magnetic nanometer temperature measurement method provided by the disclosure has the advantage of a wide temperature measurement range. Different magnetic nanometer coating materials can be selected according to the different temperature ranges under measurement. Theoretically, the upper limit of the temperature measurement of the disclosure is the Curie temperature of the magnetic nano-coating material.

BRIEF DESCRIPTION OF THE DRAWINGS

FIG. 1 is a flow chart of a magnetic nanometer temperature measurement method provided by the first embodiment of the disclosure.

FIG. 2 is a curve showing the change of magnetization intensity with respect to the temperature of the nickel-plated magnetic nano-coating provided by the first embodiment of the disclosure under the applied magnetic field intensity.

FIG. 3 is a curve showing the change of magneto-optical Kerr angle with respect to the temperature of the nickel-plated magnetic nano-coating provided by the first embodiment of the disclosure under the applied magnetic field intensity.

DESCRIPTION OF THE EMBODIMENTS

In order to make the purpose, technical solutions, and advantages of the present disclosure more comprehensible, the following further describes the present disclosure in detail with reference to the accompanying drawings and embodiments. It should be understood that the specific embodiments described here are only used to explain the present disclosure, but not to limit the present disclosure. In addition, the technical features involved in the various embodiments of the present disclosure described below can be combined with each other as long as they do not conflict with each other.

First Embodiment

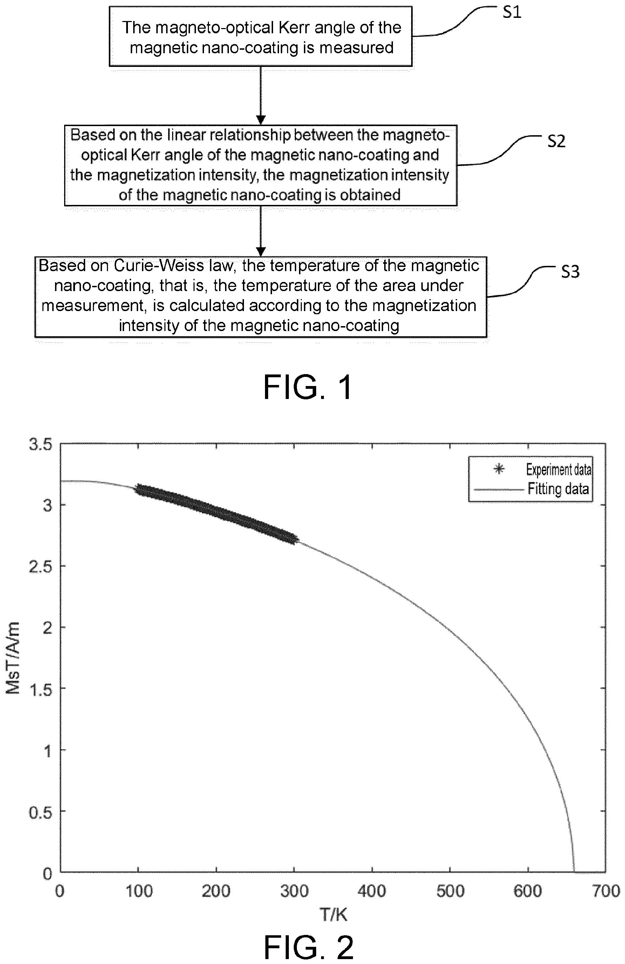

A magnetic nanometer temperature measurement method, as shown in FIG. 1, includes the following steps: Step S 1: The magneto-optical Kerr angle of the magnetic nano-coating is measured; the magnetic nano-coating is arranged on the area under measurement. Furthermore, a corresponding magnetic nano-coating is selected according to the specific measurement scenario, and the Curie temperature of the selected magnetic nano-coating is greater than the temperature of the area under measurement. The magnetic nano-coating can be Mn-Bi polycrystalline material, rare earth-transition metal amorphous material, ferrite material and Pt/Co composition modulating material, etc. Specifically, the light adopted to measure the magneto-optical Kerr angle of the magnetic nano-coating is not limited to infrared light, and can also be visible light. Different light can be selected according to different conditions, so it is possible to realize non-intrusive temperature measurement of the area under measurement in different special environments.

Specifically, an extinction magneto-optical Kerr angle measurement method, a photometric magneto-optical Kerr angle measurement method, and other methods can be adopted to measure the magneto-optical Kerr angle of the magnetic nano-coating. Since the light intensity detected by the photodetector is zero during the extinction calibration, many unnecessary interferences such as room light or mechanical vibration are eliminated. The extinction magneto-optical Kerr angle measurement method is more accurate than the photometric magneto-optical Kerr angle measurement method. The disclosure preferably adopts the extinction magneto-optical Kerr angle measurement method to measure the magneto-optical Kerr angle of the magnetic nano-coating. Specifically, the method for measuring the magneto-optical Kerr angle of the magnetic nano-coating in this embodiment is as follows.

The magnetic nano-coating is placed on the area under measurement, the positions of the light generator, polarizer, magnetic nano-coating, analyzer, and photoelectric sensor are adjusted to form a completed reflection circuit.

The angles of the polarizer and analyzer are adjusted to make the polarized light intensity measured by the photoelectric sensor to be zero.

The analyzer is rotated by the angle $\delta$, and the photoelectric sensor is adopted to measure the polarized light intensity, which is $I_0$ at this time.

A DC magnetic field is applied to the area under measurement, and a photoelectric sensor is adopted to measure the polarized light intensity, which is I at this time.

Based on the rotation angle $\delta$ of the analyzer, the polarized light intensity $I_0$, and the polarized light intensity I, the magneto-optical Kerr angle of polarized light, that is, the magneto-optical Kerr angle of the magnetic nano-coating, is calculated. Specifically, the magneto-optical Kerr angle of the magnetic nano-coating is $\theta_K = \dfrac{\delta}{2}\dfrac{I - I_0}{I_0}$ .

Step S2: Based on the linear relationship between the magneto-optical Kerr angle of the magnetic nano-coating and the magnetization intensity, the magnetization intensity of the magnetic nano-coating is obtained.

Specifically, since the magneto-optical Kerr angle of the magnetic nano-coating has a linear relationship with respect to the magnetization intensity when the temperature of the area under measurement is less than the Curie temperature of the magnetic nano-coating, the disclosure calculates and obtains the magnetization intensity of the magnetic nano-coating based on the linear relationship. Specifically, the linear relationship between the magneto-optical Kerr angle of the magnetic nano-coating and the magnetization intensity is expressed as follows.

$$\theta_K = A_{K1} + A_{K2}M_S$$

In the expression, $\theta_K$ is the magneto-optical Kerr angle of the magnetic nano-coating; $A_{K1}$ and $A_{K2}$ are the optical matrix parameters describing the magneto-optical Kerr effect of the magnetic nano-coating, specifically representing the property of the magnetic nano-coating, and they are constants; and $M_S$ is the magnetization intensity of the magnetic nano-coating.

Step S3: Based on Curie-Weiss law, the temperature of the magnetic nano-coating, that is, the temperature of the area under measurement, is calculated according to the magnetization intensity of the magnetic nano-coating.

Specifically, the magnetic nano-coating adopted in the disclosure is ferromagnetic, ferrimagnetic, and superparamagnetic materials. Ferromagnetic, ferrimagnetic, and superparamagnetic materials comply with Curie-Weiss law. Under the circumstances, different physical models can be established at different temperatures according to different types of magnetic nano-coatings. The classic physical models include Bloch T^(3/2) law, Brillouin equation, Langevin equation, etc. Preferably, Brillouin equation is adopted to obtain the temperature of the magnetic nano-coating according to the magnetization intensity of the magnetic nano-coating, that is, the temperature of the area under measurement. Specifically, the magnetization intensity of the magnetic nano-coating can be introduced to the Brillouin equation to calculate the ratio x of the Zeeman energy of the magnetic moment of the induced magnetic field of the magnetic nano-coating and the superimposed magnetic field of the applied magnetic field to the random thermal energy. Then, based on the inverse proportional relationship between x and the absolute temperature T, the absolute temperature T, that is, the temperature of the magnetic nano-coating, is calculated.

It should be noted that whether there is an applied magnetic field is related to the measurement method of the magneto-optical Kerr angle. The conventional magneto-optical Kerr angle measurement method often requires an applied magnetic field. The magneto-optical Kerr angle can be detected by changing the magnitude of the applied magnetic field. In addition, for specific ferromagnetic magnetic nano-coatings, the magneto-optical Kerr angle can also be measured according to changes in temperature. Specifically, on basis of the above-mentioned device for measuring the magneto-optical Kerr angle, the polarized light intensity at normal temperature is measured by using the photoelectric sensor. Then, the polarized light intensity at temperature under measurement is measured by using the photoelectric sensor. Thereafter, the magneto-optical Kerr angle of the magnetic nano-coating is obtained based on the difference between light intensities. Under the circumstances, there is no applied magnetic field, it can be considered that the field strength of the applied magnetic field is zero.

Take the Brillouin function as an example to explain as follows:

The magnetization intensity of the amorphous alloy is related to the Brillouin function, and its saturation magnetization intensity can be expressed as:

$$M_S(x) = Ng\mu_B J B_J(x)$$

In the expression, N is the number of atoms in the magnetic nano-coating per unit volume, g is the Lande factor,

$\mu_B$ is the Bohr magneton, J is the total angular momentum quantum number of the microscopic magnetic moment in the magnetic nano-coating, $B_j(x)$ is the Brillouin function, and x is the ratio of the Zeeman energy of the magnetic moment of the applied magnetic field to the random thermal energy.

In the expression, the Brillouin function $B_j(x)$ is a relationship function that describes the magnetization intensity and the total angular momentum quantum number J of the microscopic magnetic moment in the applied magnetic field as well as the magnetic nano-coating, as well as the ratio x of the Zeeman energy of the magnetic moment of the induced magnetic field of the magnetic nano-coating and the superimposed magnetic field of the applied magnetic field to the random thermal energy. Specifically, the function is as follows:

$$B_J(x) = \left(\frac{2J+1}{2J}\right)\coth\left(\frac{2J+1}{2J}\mathrm{x}\right) - \left(\frac{1}{2J}\right)\coth\left(\frac{1}{2J}\mathrm{x}\right)$$

Based on the above two formulas, the ratio x of the Zeeman energy of the magnetic moment of the induced magnetic field of the magnetic nano-coating and the superimposed magnetic field of the applied magnetic field to the random thermal energy can be calculated.

Furthermore, since the ratio x of the Zeeman energy of the magnetic moment of the induced magnetic field of the magnetic nano-coating and the superimposed magnetic field of the applied magnetic field to the random thermal energy is inversely proportional to the temperature T of the magnetic nano-coating, based on this relationship, the temperature T of the magnetic nano-coating can be obtained as follows:

$$T = \frac{g\mu_B JB}{K_B x}$$

In the expression, B is the sum of the induced magnetic field intensity of the magnetic nano-coating and the applied magnetic field intensity; and $K_B$ is Boltzmann constant.

Further, in order to verify the feasibility of the magnetic nanometer temperature measurement method provided by the disclosure, a superparamagnetic 10 nm silicon nickel-plated film is adopted as the magnetic nano-coating in the disclosure.

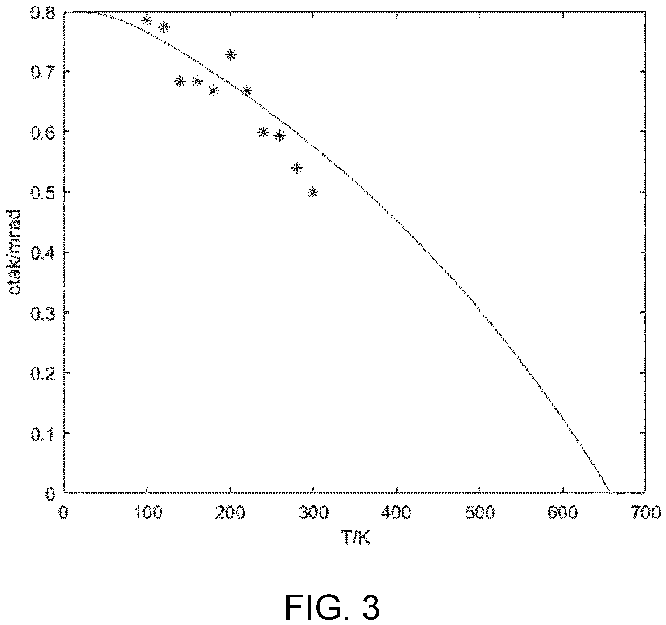

Specifically, an energized solenoid is adopted to apply a DC magnetic field (the magnetic field strength ranges from 500 Gs to 2 TGs) with a certain magnitude to the magnetic nano-coating in the area under measurement. Meanwhile, a heating experiment is performed on the magnetic nano-coating in the temperature field. When measuring the magneto-optical Kerr angle, the adopted incident laser wavelength is 532 nm, and the incident laser power is 2.06 $\mu$W. The data acquisition card and labview are adopted to simultaneously collect and process the magneto-optical Kerr angle $\theta_K$ on the computer to obtain the film magnetization intensity $M_s$, thereby obtaining the relationship showing the change of the magnetization intensity $M_s$ with respect to the temperature T of the magnetic nano-coating, as shown in FIG. 2. The relationship showing the change of the film magneto-optical Kerr angle $\theta_K$ with respect to the temperature T of the magnetic nano-coating is shown in FIG. 3. In the diagrams, the curve represents the relationship fitting result obtained in the disclosure, and "*" represents the specific experimental measurement result. It can be seen from the diagrams that the relationship between the magnetization intensity $M_s$ and the temperature T of the magnetic nano-coating and the relationship between the film magneto-optical Kerr angle $\theta_K$ and the temperature T of the magnetic nano-coating obtained in the disclosure are consistent with the specific experimental measurement results. Moreover, the temperature accuracy measured by using the measurement method provided by the disclosure can be up to 10K, and the measurement method of the disclosure is simple and the measurement speed is fast.

Second Embodiment

A magnetic nanometer temperature measurement system, including:
A magneto-optical Kerr angle measurement module is configured to measure the magneto-optical Kerr angle of the magnetic nano-coating; the magnetic nano-coating is arranged on the area under measurement; the Curie temperature of the magnetic nano-coating is less than the temperature of the area under measurement.

A magnetization intensity calculation module is configured to obtain the magnetization intensity of the magnetic nano-coating based on the linear relationship between the magneto-optical Kerr angle of the magnetic nano-coating and the magnetization intensity.

A temperature calculation module is configured to calculate the temperature of the magnetic nano-coating, that is, the temperature of the area under measurement, according to the magnetization intensity of the magnetic nano-coating based on Curie-Weiss law.

The technical features related to the second embodiment are the same as those described in the first embodiment, and no further description is incorporated herein.

**Claims**

1. A method for measuring a magnetic nanometer temperature, comprising the following steps:

   step S1: measuring a magneto-optical Kerr angle of a magnetic nano-coating; wherein the magnetic nano-coating is arranged on an area under measurement, a Curie temperature of the magnetic nano-coating is greater than a temperature of the area under measurement;

   step S2: based on a linear relationship between the magneto-optical Kerr angle of the magnetic nano-coating and a magnetization intensity, obtaining a magnetization intensity of the magnetic nano-coating;

   step S3: based on Curie-Weiss law, calculating a temperature of the magnetic nano-coating, that is, the temperature of the area under measurement, according to the magnetization intensity of the magnetic nano-coating.

2. The method for measuring the magnetic nanometer temperature according to claim 1, wherein the linear relationship between the magneto-optical Kerr angle of the magnetic nano-coating and the magnetization intensity is expressed as follows:

$$\theta_K = A_{K1} + A_{K2} M_S$$

   wherein $\theta_K$ is the magneto-optical Kerr angle of the magnetic nano-coating; $A_{K1}$ and $A_{K2}$ are optical matrix parameters describing a magneto-optical Kerr effect of the magnetic nano-coating; and $M_S$ is the magnetization intensity of the magnetic nano-coating.

3. The method for measuring the magnetic nanometer temperature according to claim 2, wherein the temperature T of the area under measurement is:

$$T = \frac{g\mu_B J B}{K_B x}$$

$$M_S(x) = N g \mu_B J B_J(x)$$

$$B_J(x) = (\frac{2J+1}{2J})\coth\left(\frac{2J+1}{2J}x\right) - \frac{1}{2J}\coth\left(\frac{1}{2J}x\right)$$

   wherein g is a Lande factor, $\mu_B$ is a Bohr magneton, J is a total angular momentum quantum number of a microscopic magnetic moment in the magnetic nano-coating, B is a sum of an induced magnetic field intensity of the magnetic nano-coating and an applied magnetic field intensity, $K_B$ is a Boltzmann constant, x is a ratio of a Zeeman energy of a magnetic moment of an induced magnetic field of the magnetic nano-coating and a superimposed magnetic field of the applied magnetic field to a random thermal energy, N is a number of atoms in the magnetic nano-coating per unit volume, and $B_J(x)$ is a Brillouin function.

4. The method for measuring the magnetic nanometer temperature according to claim 1, wherein the magneto-optical Kerr angle of the magnetic nano-coating is measured by using an extinction magneto-optical Kerr angle measurement method.

5. The method for measuring the magnetic nanometer temperature according to claim 4, wherein the step S 1 comprises:

   placing the magnetic nano-coating on the area under measurement, adjusting positions of a light generator, a polarizer, a magnetic nano-coating, an analyzer, and a photoelectric sensor to form a completed reflection circuit;

adjusting angles of the polarizer and the analyzer to make a polarized light intensity measured by the photoelectric sensor to be zero;

rotating the analyzer by an angle $\delta$, and adopting the photoelectric sensor to measure the polarized light intensity, which is $I_0$ at this time;

applying a DC magnetic field to the area under measurement, and adopting the photoelectric sensor to measure the polarized light intensity, which is I at this time;

calculating the magneto-optical Kerr angle of the magnetic nano-coating based on the rotation angle $\delta$ of the analyzer, the polarized light intensity $I_0$, and the polarized light intensity I.

6. The method for measuring the magnetic nanometer temperature according to claim 5, wherein the magneto-optical Kerr angle of the magnetic nano-coating is:

$$\theta_K = \frac{\delta}{2} \frac{I - I0}{I0}.$$

7. A magnetic nanometer temperature measurement system, comprising:

a magneto-optical Kerr angle measurement module, configured to measure a magneto-optical Kerr angle of a magnetic nano-coating, wherein the magnetic nano-coating is arranged on an area under measurement, a Curie temperature of the magnetic nano-coating is less than a temperature of the area under measurement;

a magnetization intensity calculation module, configured to obtain a magnetization intensity of the magnetic nano-coating based on a linear relationship between the magneto-optical Kerr angle of the magnetic nano-coating and a magnetization intensity;

a temperature calculation module, configured to calculate a temperature of the magnetic nano-coating, that is, the temperature of the area under measurement, according to the magnetization intensity of the magnetic nano-coating based on Curie-Weiss law.

**Patentansprüche**

1. Verfahren zur Messung einer magnetischen Nanometertemperatur, das die folgenden Schritte umfasst:

Schritt S1: Messen eines magnetooptischen Kerr-Winkels einer magnetischen Nanobeschichtung; wobei die magnetische Nanobeschichtung auf einer zu messenden Fläche angeordnet ist, eine Curie-Temperatur der magnetischen Nanobeschichtung größer als eine Temperatur der zu messenden Fläche ist;

Schritt S2: basierend auf einer linearen Beziehung zwischen dem magnetooptischen Kerr-Winkel der magnetischen Nanobeschichtung und einer Magnetisierungsintensität, Erhalten einer Magnetisierungsintensität der magnetischen Nanobeschichtung;

Schritt S3: Basierend auf dem Curie-Weiss-Gesetz, Berechnen einer Temperatur der magnetischen Nanobeschichtung, das heißt der Temperatur des zu messenden Bereichs, entsprechend der Magnetisierungsintensität der magnetischen Nanobeschichtung.

2. Verfahren zur Messung der magnetischen Nanometertemperatur gemäß Anspruch 1, wobei die lineare Beziehung zwischen dem magnetooptischen Kerr-Winkel der magnetischen Nanobeschichtung und der Magnetisierungsintensität wie folgt ausgedrückt wird:

$$\theta_K = A_{K1} + A_{K2} M_S$$

wobei $\theta_K$ der magnetooptische Kerr-Winkel der magnetischen Nanobeschichtung ist; $A_{K1}$ und $A_{K2}$ optische Matrixparameter sind, die einen magnetooptischen Kerreffekt der magnetischen Nanobeschichtung beschreiben; und $M_S$ die Magnetisierungsintensität der magnetischen Nanobeschichtung ist.

3. Verfahren zur Messung der magnetischen Nanometertemperatur gemäß Anspruch 2, wobei die Temperatur T des zu messenden Bereichs ist:

$$T = \frac{g\mu_B J B}{K_B x}$$

$$M_S(x) = N g\mu_B J B_J(x)$$

$$B_J(x) = \left(\frac{2J+1}{2J}\right)\coth\left(\frac{2J+1}{2J}x\right) - \frac{1}{2J}\coth\left(\frac{1}{2J}x\right)$$

wobei g ein Landé-Faktor ist, $\mu_B$ ein Bohrsches-Magneton ist, J eine Gesamtdrehimpuls-Quantenzahl eines mikroskopischen magnetischen Moments in der magnetischen Nanobeschichtung ist, B eine Summe einer induzierten Magnetfeldstärke der magnetischen Nanobeschichtung und einer angelegten Magnetfeldstärke ist, $K_B$ eine Boltzmann-Konstante ist, x ist das Verhältnis einer Zeeman-Energie eines magnetischen Moments eines induzierten Magnetfelds der magnetischen Nanobeschichtung und eines überlagerten Magnetfelds des angelegten Magnetfelds zu einer zufälligen thermischen Energie, N die Anzahl der Atome in der magnetischen Nanobeschichtung pro Volumeneinheit ist, und $B_J(x)$ eine Brillouin-Funktion ist.

4. Verfahren zur Messung der magnetischen Nanometertemperatur gemäß Anspruch 1, wobei der magnetooptische Kerr-Winkel der magnetischen Nanobeschichtung unter Verwendung eines magnetooptischen Extinktions-Kerr-Winkelmessverfahrens gemessen wird.

5. Verfahren zur Messung der magnetischen Nanometertemperatur gemäß Anspruch 4, wobei der Schritt S1 umfasst:

   Anbringen der magnetischen Nanobeschichtung auf dem zu messenden Bereich, Einstellen von Positionen eines Lichtgenerators, eines Polarisators, einer magnetischen Nanobeschichtung, eines Analysators und eines photoelektrischen Sensors, um einen vollständigen Reflexionskreis zu bilden;
   Einstellen von Winkeln des Polarisators und des Analysators, um eine von dem photoelektrischen Sensor gemessene Intensität des polarisierten Lichts auf Null zu bringen;
   Drehen des Analysators um einen Winkel $\delta$ und Anpassen des fotoelektrischen Sensors, um die Intensität des polarisierten Lichts zu messen, die zu diesem Zeitpunkt $I_0$ ist;
   Anlegen eines Gleichstrom-Magnetfelds an den zu messenden Bereich und Anpassen des photoelektrischen Sensors, um die Intensität des polarisierten Lichts zu messen, die zu diesem Zeitpunkt I ist;
   Berechnen des magnetooptischen Kerr-Winkels der magnetischen Nanobeschichtung basierend auf dem Drehwinkel $\delta$ des Analysators, der Intensität des polarisierten Lichts $I_0$ und der Intensität des polarisierten Lichts I.

6. Verfahren zur Messung der magnetischen Nanometertemperatur gemäß Anspruch 5, wobei der magnetooptische Kerr-Winkel der magnetischen Nanobeschichtung ist:

$$\theta_K = \frac{\delta}{2}\frac{I-I0}{I0}.$$

7. Magnetisches Nanometer-Temperaturmesssystem, umfassend:

   ein magnetooptisches Kerr-Winkel-Messmodul, das konfiguriert ist, um einen magnetooptischen Kerr-Winkel einer magnetischen Nano-Beschichtung zu messen, wobei die magnetische Nano-Beschichtung auf einer zu messenden Fläche angeordnet ist, eine Curie-Temperatur der magnetischen Nano-Beschichtung niedriger als die Temperatur der zu messenden Fläche ist;
   ein Magnetisierungsintensität-Berechnungsmodul, das konfiguriert ist, um eine Magnetisierungsintensität der magnetischen Nanobeschichtung basierend auf einer linearen Beziehung zwischen dem magnetooptischen Kerr-Winkel der magnetischen Nanobeschichtung und einer Magnetisierungsintensität zu erhalten;
   ein Temperaturberechnungsmodul, das konfiguriert ist, um eine Temperatur der magnetischen Nano-Beschichtung, das heißt die Temperatur des zu messenden Bereichs, gemäß der Magnetisierungsintensität der magnetischen Nanobeschichtung basierend auf dem Curie-Weiss-Gesetzes zu berechnen.

**Revendications**

1. Procédé de mesure d'une température nanométrique magnétique, comprenant les étapes suivantes :

   étape S1 : la mesure d'un angle de Kerr magnéto-optique d'un nano-revêtement magnétique ; dans lequel le nano-revêtement magnétique est agencé sur une zone de mesure, une température de Curie du nano-revêtement magnétique est supérieure à une température de la zone de mesure ;
   étape S2 : sur la base d'une relation linéaire entre l'angle de Kerr magnéto-optique du nano-revêtement magnétique et une intensité de magnétisation, l'obtention d'une intensité de magnétisation du nano-revêtement magnétique ;
   étape S3 : sur la base de la loi de Curie-Weiss, le calcul d'une température du nano-revêtement magnétique, c'est-à-dire de la température de la zone de mesure, en fonction de l'intensité de magnétisation du nano-revêtement magnétique.

2. Procédé de mesure de la température nanométrique magnétique selon la revendication 1, dans lequel la relation linéaire entre l'angle de Kerr magnéto-optique du nano-revêtement magnétique et l'intensité de magnétisation est exprimée comme suit :

$$\theta_K = A_{K1} + A_{K2}M_S$$

   dans lequel $\theta_K$ est l'angle de Kerr magnéto-optique du nano-revêtement magnétique ; $A_{K1}$ et $A_{K2}$ sont des paramètres de matrice optique décrivant un effet de Kerr magnéto-optique du nano-revêtement magnétique ; et $M_S$ est l'intensité de magnétisation du nano-revêtement magnétique.

3. Procédé de mesure de la température nanométrique magnétique selon la revendication 2, dans lequel la température T de la zone de mesure est :

$$T = \frac{g\mu_B J B}{K_B x}$$

$$M_s(x) = Ng\mu_B J B_J(x)$$

$$B_J(x) = \left(\frac{2J+1}{2J}\right)\coth\left(\frac{2J+1}{2J}x\right) - \frac{1}{2J}\coth\left(\frac{1}{2J}x\right)$$

   dans lequel g est un facteur de Landé, $\mu_B$ est un magnéton de Bohr, J est un nombre quantique de moment angulaire total d'un moment magnétique microscopique dans le nano-revêtement magnétique, B est une somme d'une intensité de champ magnétique induit du nano-revêtement magnétique et d'une intensité de champ magnétique appliqué, $K_B$ est une constante de Boltzmann, x est un rapport d'une énergie de Zeeman d'un moment magnétique d'un champ magnétique induit du nano-revêtement magnétique et d'un champ magnétique superposé du champ magnétique appliqué sur une énergie thermique aléatoire, N est un nombre d'atomes dans le nano-revêtement magnétique par unité de volume, et $B_J(x)$ est une fonction de Brillouin.

4. Procédé de mesure de la température nanométrique magnétique selon la revendication 1, dans lequel l'angle de Kerr magnéto-optique du nano-revêtement magnétique est mesuré en utilisant un procédé de mesure d'angle de Kerr magnéto-optique d'extinction.

5. Procédé de mesure de la température nanométrique magnétique selon la revendication 4, dans lequel l'étape S1 comprend :

   le placement du nano-revêtement magnétique sur la zone de mesure, l'ajustement de positions d'un générateur de lumière, d'un polariseur, d'un nano-revêtement magnétique, d'un analyseur et d'un capteur photoélectrique pour former un circuit de réflexion complet ;
   l'ajustement d'angles du polariseur et de l'analyseur pour rendre une intensité de lumière polarisée mesurée par le capteur photoélectrique égale à zéro ;

la rotation de l'analyseur d'un angle δ, et l'adoption du capteur photoélectrique pour mesurer l'intensité de lumière polarisée, qui est $I_0$ à ce stade ;

l'application d'un champ magnétique CC à la zone de mesure, et l'adoption du capteur photoélectrique pour mesurer l'intensité de lumière polarisée, qui est I à ce stade ;

le calcul de l'angle de Kerr magnéto-optique du nano-revêtement magnétique sur la base de l'angle de rotation δ de l'analyseur, de l'intensité de lumière polarisée $I_0$ et de l'intensité de lumière polarisée I.

6. Procédé de mesure de la température nanométrique magnétique selon la revendication 5, dans lequel l'angle de Kerr magnéto-optique du nano-revêtement magnétique est :

$$\theta_k = \frac{\delta}{2} \frac{I - I_0}{I_0}.$$

7. Système de mesure de température nanométrique magnétique, comprenant :

un module de mesure d'angle de Kerr magnéto-optique, configuré pour mesurer un angle de Kerr magnéto-optique d'un nano-revêtement magnétique, dans lequel le nano-revêtement magnétique est agencé sur une zone de mesure, une température de Curie du nano-revêtement magnétique est inférieure à une température de la zone de mesure ;

un module de calcul d'intensité de magnétisation, configuré pour obtenir une intensité de magnétisation du nano-revêtement magnétique sur la base d'une relation linéaire entre l'angle de Kerr magnéto-optique du nano-revêtement magnétique et une intensité de magnétisation ;

un modèle de calcul de température, configuré pour calculer une température du nano-revêtement magnétique, c'est-à-dire la température de la zone de mesure, en fonction de l'intensité de magnétisation du nano-revêtement magnétique sur la base de la loi de Curie-Weiss.

```
┌─────────────────────────────────────┐
│  The magneto-optical Kerr angle of the   │────⌐ S1
│  magnetic nano-coating is measured      │
└─────────────────────────────────────┘
                    │
                    ▼
┌─────────────────────────────────────┐
│ Based on the linear relationship between the magneto- │────⌐ S2
│ optical Kerr angle of the magnetic nano-coating and   │
│ the magnetization intensity, the magnetization intensity │
│     of the magnetic nano-coating is obtained          │
└─────────────────────────────────────┘
                    │
                    ▼
┌─────────────────────────────────────┐
│ Based on Curie-Weiss law, the temperature of the magnetic │────⌐ S3
│  nano-coating, that is, the temperature of the area under  │
│ measurement, is calculated according to the magnetization │
│        intensity of the magnetic nano-coating             │
└─────────────────────────────────────┘
```

# FIG. 1

FIG. 2

FIG. 3

**EP 4 095 499 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106556466 B